# FASCICULE DE BREVET EUROPEEN

(11) **EP 3 019 328 B1**
(45) Date de publication et mention de la délivrance du brevet: **28.08.2019**
(21) Numéro de dépôt: 14790129.2
(22) Date de dépôt: 11.07.2014
(51) Int. Cl.: B29C 53/68, B29C 53/80

(54) **ROUE DE GUIDAGE POUR LES ENSEMBLES DE POSE DE COUCHES DE FILS D'ARMURE ET METHODE DE MONTAGE ASSOCIEE**
FÜHRUNGSRAD FÜR ANLAGEN ZUR MONTAGE VON SCHICHTEN VON VERSTÄRKUNGSDRÄHTEN UND ENTSPRECHENDES MONTAGEVERFAHREN
GUIDE WHEEL FOR ASSEMBLIES FOR FITTING LAYERS OF ARMOR WIRES, AND ASSOCIATED MOUNTING METHOD

(30) Priorité: 11.07.2013 FR 1356825
(43) Date de publication de la demande: 18.05.2016
(73) Titulaire: Technip France, 92400 Courbevoie (FR)
(72) Inventeur: DOUTHE, Vincent, F-76120 Le Grand-Quevilly (FR); LAPORTE, Gilbert, 27180 Saint Sébastien de Morsent (FR); MARTINEZ, Fabien, 76450 Ourville-en-Caux (FR)
(74) Mandataire: Fédit-Loriot
(86) Numéro de dépôt international: PCT/FR2014/051792
(87) Numéro de publication internationale: WO 2015/004398

(56) Documents cités:
- FR-A1- 2 913 364

## Description

La présente invention se rapporte à un outillage destiné aux ensembles de pose d'une couche de fils d'armure autour d'un noyau tubulaire pour fabriquer une conduite tubulaire flexible apte au transport des hydrocarbures.

En particulier, l'outillage objet de l'invention, permet de poser des fils d'armure en carbone.

Le concept de conduite tubulaire flexible incluant une couche de renforcement comprenant des fils de carbone est déjà connu. On pourra se référer au document FR2776358 décrivant une telle conduite tubulaire. Les fils de carbone ou profilés composite carbone présentent en effet d'excellentes propriétés mécaniques en traction, sensiblement deux fois supérieures aux fils d'acier et au surplus, ils sont comparativement beaucoup plus légers. L'exploitation pétrolière en mer s'effectuant de plus en plus à de grandes profondeurs, par exemple au-delà de 3000 m, le poids total de la conduite tubulaire flexible devient de plus en plus important, et partant, les moyens de retenue, essentiellement des bouées, sont de plus en plus volumineux et coûteux.

S'agissant des conduites tubulaires flexibles traditionnelles, la pluralité de fils d'armure en acier est enroulée à pas long hélicoïdalement et simultanément autour d'un noyau tubulaire, de manière à réaliser une nappe de fils d'armure. Ces fils sont plats, et ils sont inclinés selon un angle compris par exemple entre 20° et 60° par rapport à l'axe de la conduite flexible. De 40 à 90 fils par exemple peuvent être ainsi enroulés simultanément autour du noyau tubulaire. Ce dernier comprend, une gaine étanche réalisée dans un matériau polymère, et une couche d'un fil d'armure enroulé à pas court autour de la gaine étanche pour permettre à la conduite de résister à la pression radiale exercée par le fluide pétrolier transporté. Au surplus, une seconde nappe de fils d'armure est enroulée en sens inverse autour de la première couche.

Les nappes d'armure sont mises en oeuvre au moyen d'une installation comprenant au moins une roue support, laquelle présente un évidement central pour autoriser le passage du noyau tubulaire à travers ladite roue. Cette dernière comprend des bobines de stockage d'une pluralité de fils d'armure et une pluralité d'organes de guidage montés autour dudit évidement central. Le noyau tubulaire et la roue sont alors entraînés simultanément, le noyau tubulaire à travers l'évidement central et la roue en rotation autour du noyau tubulaire de manière à enrouler hélicoïdalement à pas long, les fils d'armure sur le noyau, tandis que chacun desdits fils d'armure est entraîné en translation à travers les organes de guidage. Les fils d'armure s'étendent ainsi respectivement entre les organes de guidage et le noyau tubulaire en provoquant la flexion du fil d'armure. On se référera au document WO2010/012897, lequel décrit une telle installation traditionnelle.

Tout naturellement, il a été imaginé de réaliser des nappes d'armure en fils de carbone grâce à une installation traditionnelle du type décrit ci-dessus. Or, malgré les possibilités de réglage offertes par cette installation, les fils d'armure en carbone ne s'ajustent pas correctement sur le noyau tubulaire et au surplus, lorsque la vitesse d'enroulement augmente, les fils de carbone tendent à casser. On se référera au document FR2913364 divulguant une telle installation.

Aussi, un problème qui se pose et que vise à résoudre la présente invention, est de fournir une roue de guidage qui permette de poser une couche de fils d'armure en carbone à des vitesses suffisantes pour ne pas grever leur coût de réalisation et sans endommager les fils d'armure.

Dans ce but, et selon un premier objet, la présente invention propose une roue de guidage destinée à la pose d'une couche de fils d'armure en carbone autour d'un noyau tubulaire pour fabriquer une conduite tubulaire flexible apte au transport des hydrocarbures, ladite roue de guidage présentant d'une part un évidement central et une bordure circulaire interne bordant ledit évidement central, et d'autre part une bordure circulaire périphérique qui s'étend coaxialement à distance de ladite bordure circulaire interne, ladite roue de guidage comportant une pluralité de dispositifs de guidage apte à guider respectivement en translation une pluralité de fils d'armure en carbone traversant ladite bordure circulaire périphérique, les dispositifs de guidage étant montés autour dudit évidement central pour pouvoir guider les fils d'armure en carbone lorsque ledit noyau tubulaire est entraîné en translation à travers ledit évidement central, tandis que ladite roue de guidage est entraînée en rotation, de manière à pouvoir enrouler hélicoïdalement simultanément lesdits fils d'armure en carbone autour dudit noyau tubulaire. Selon l'invention, chacun desdits dispositifs de guidage comprend d'une part un organe de renvoi périphérique monté dans ladite bordure circulaire périphérique pour pouvoir guider les fils d'armure en carbone vers ladite bordure circulaire interne à travers un premier chemin de passage incurvé, et d'autre part un organe de renvoi central monté dans ladite bordure circulaire interne pour pouvoir guider lesdits fils d'armure en carbone à travers un second chemin de passage incurvé à l'opposé de ladite roue, ledit organe de renvoi périphérique et ledit organe de renvoi central étant reliés ensemble par un organe de guidage rectiligne.

Ainsi, une caractéristique de l'invention réside dans la mise en oeuvre d'un dispositif de guidage qui s'étend au moins partiellement de la bordure circulaire périphérique de la roue de guidage, vers le noyau tubulaire en définissant un chemin de passage global doublement incurvé en S. De la sorte, le fil d'armure est entraîné en translation à travers ce chemin de passage global en S avant de venir s'appliquer à plat sur le noyau, comme cela est le cas lorsque l'on enroule une bande ou un ruban autour des nappes d'armure. Il est ainsi parfaitement guidé et au moins partiellement préservé à travers le chemin de passage. Par conséquent, les fils d'armure en carbone demeurent libres entre la roue de guidage et le noyau sur une distance plus courte que ne le permettent les installations selon l'art antérieur. Ainsi qu'on l'expliquera plus en détail dans la suite de la description, les courbures imposées aux fils d'armure en carbone, à travers le chemin de passage doublement incurvé, sont bien évidemment très inférieurs à leur limite élastique.

L'organe de guidage reliant ensemble ledit organe de renvoi périphérique et ledit organe de renvoi central permet d'une part d'offrir une plus grande rigidité au dispositif de guidage, et d'autre part de mieux préserver encore les fils d'armure en carbone lorsqu'ils traversent le chemin de passage en S.

De plus, selon une caractéristique préférée, ledit organe de guidage rectiligne est télescopiquement réglable. De la sorte, la distance entre l'organe de renvoi périphérique et l'organe de renvoi central peut être aisément réglée, d'une part pour mieux s'adapter à différents diamètres de pose, et d'autre part pour régler l'ajustement des fils d'armure en carbone sur le noyau tubulaire comme on l'expliquera plus en détail dans la suite de la description.

Au surplus, ledit organe de renvoi périphérique et ledit organe de renvoi central sont avantageusement réglables en rotation l'un par rapport à l'autre selon l'axe dudit organe de guidage rectiligne. Ainsi, grâce à cette possibilité, les fils d'armure en carbone peuvent être sensiblement torsadés entre les deux organes de renvoi et partant, le plan défini par le second chemin de passage incurvé est incliné par rapport au plan défini par le premier chemin de passage incurvé. Cette caractéristique permet également un meilleur réglage de l'application des fils d'armure en carbone sur le noyau tubulaire, et notamment de l'angle d'application des fils d'armure par rapport à l'organe tubulaire.

En outre, chacun desdits dispositifs de guidage comprend une platine de fixation montée à pivotement sur ledit organe de renvoi central et un organe de réglage de la position relative dudit organe de renvoi central et de ladite platine de fixation. De la sorte, il est plus aisé de maintenir la position angulaire de l'organe de renvoi central par rapport à l'organe de renvoi périphérique.

S'agissant de l'organe de renvoi périphérique, il comprend préférentiellement un organe de guidage amont destiné à être fixé à travers ladite bordure circulaire périphérique. Cet organe de guidage amont, dénommé également écubier, présente une section droite correspondant à la section du fil armure en carbone et il permet de faciliter le coulissement du fil. De préférence, ledit organe de guidage amont comprend un embout de guidage tubulaire monté à rotation, ledit embout de guidage tubulaire présentant une fente d'entrée. De la sorte, l'embout de guidage tubulaire s'adapte à l'orientation du fil lorsqu'il entre dans l'organe de guidage amont.

De plus, ledit organe de renvoi central comprend un organe de guidage aval, ledit organe de guidage aval comportant une pièce aval de guidage tubulaire montée à rotation. De la sorte, l'orientation du fil d'armure entre l'organe de renvoi central et le noyau tubulaire étant définie par l'orientation relative du dispositif de guidage mais aussi des sensibles hétérogénéités de forme de la surface du noyau, les tensions du fil dans le sens de la torsion s'équilibrent par le biais de la pièce aval de guidage.

Par ailleurs, ledit organe de renvoi périphérique et ledit organe de renvoi central de chacun desdits dispositifs de guidage sont ajustés dans le prolongement l'un de l'autre selon une corde de ladite roue, et plus précisément selon une corde du cercle défini par ladite roue de guidage. Ainsi qu'on l'expliquera plus en détail dans la suite de la description, cette caractéristique permet d'augmenter l'angle entre les fils d'armure et le noyau tubulaire en fonction du nombre de fils et également en fonction de la géométrie des fils.

Selon un autre objet, la présente invention concerne une méthode de montage d'un ensemble de pose d'une couche de fils d'armure en carbone autour d'un noyau tubulaire pour fabriquer une conduite tubulaire flexible destinée au transport des hydrocarbures, ladite méthode étant du type selon laquelle on fournit une installation de fabrication comprenant au moins une roue support présentant un orifice de passage central pour autoriser le passage d'un noyau tubulaire à travers ladite au moins une roue support, ladite au moins une roue support comprenant des moyens de stockage apte à stocker une pluralité de fils d'armure en carbone, de manière à pouvoir entraîner en rotation lesdits fils d'armure en carbone autour dudit noyau tubulaire, tandis que ledit noyau tubulaire est entraîné en mouvement à travers ladite au moins une roue support pour enrouler hélicoïdalement lesdits fils d'armure en carbone sur ledit noyau. Selon l'invention, on fournit en outre une roue de guidage selon les caractéristiques ci-dessus et on installe coaxialement ladite roue de guidage sur ladite au moins une roue support. Les fils d'armure en carbone sont enroulés hélicoïdalement à pas long. Préférentiellement, l'installation de fabrication comprend deux roues support successives entraînées en sens inverse et permettant de réaliser deux nappes de fils d'armure croisées. Aussi, on fournit deux roues de guidage conforme à l'invention et on installe respectivement les deux roues de guidage sur les roues support.

En outre, selon une caractéristique de l'invention particulièrement avantageuse, on fournit un châssis de montage comprenant des organes de verrouillage de manière à pouvoir stocker et verrouiller ladite roue de guidage sur ledit châssis de montage. De la sorte, elle est aisément transportable sans risquer d'être endommagée. Préférentiellement, le châssis de montage est adapté à pouvoir stocker deux roues de guidage, dos à dos, de manière à pouvoir équiper respectivement deux roues support d'une installation de fabrication.

De plus, selon une variante de réalisation, ledit châssis de montage comprend une motorisation pour pouvoir manipuler ladite roue de guidage. La motorisation permet plus précisément d'entraîner la roue en rotation sur le châssis de montage pour pouvoir installer un à un les dispositifs de guidage comme on l'expliquera ci-après.

Aussi, avantageusement, l'étape d'installation de ladite roue de guidage comprend les étapes suivantes : on achemine ledit châssis de montage au voisinage de ladite installation de fabrication ; on déverrouille lesdits organes de verrouillage ; on installe lesdits dispositifs de guidage ; on règle lesdits dispositifs de guidage ; on installe des rehausses sur ladite au moins une roue support ; et, on rapporte ladite roue de guidage sur ladite au moins une roue support pour la fixer au moyen desdites rehausses. Bien évidemment, lorsque l'installation de fabrication comprend deux roues support, on installe des rehausses sur les deux roues support et on rapporte respectivement deux roues de guidage sur ces roues support pour les fixer au moyen des rehausses.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en écorché d'une conduite tubulaire flexible réalisée grâce à l'objet de l'invention;
- la Figure 2 est une vue schématique en coupe axiale d'une installation de fabrication d'une conduite tubulaire flexible comportant une roue de guidage conforme à l'invention ;
- la Figure 3 est une vue schématique de côté d'un élément de détail de la roue de guidage conforme à l'invention ;
- la Figure 4 est une vue schématique en perspective d'une première partie de l'élément de détail représenté sur la Figure 3;
- la Figure 5 est une vue schématique en perspective d'une seconde partie de l'élément de détail représenté sur la Figure 3;
- la Figure 6 est une vue schématique de côté montrant la roue de guidage montée sur l'installation de fabrication, conforme à l'invention ;
- la Figure 7 est une vue schématique de face montrant la roue de guidage représentée sur la Figure 6 ;
- la Figure 8 est une vue schématique d'un support de stockage de roues de guidage conforme à l'invention ;
- la Figure 9 est une vue schématique en perspective d'un élément de détail de la roue de guidage représentée sur la Figure 2, selon une variante de réalisation ;
- la Figure 10 est une vue schématique partielle en perspective de la roue de guidage équipée d'éléments de détail, selon ladite variante de réalisation représentée sur la Figure 9 ; et,
- la Figure 11 est une vue schématique en perspective du support de stockage de roues de guidage représenté sur la Figure 8 équipé d'éléments de détail représentés, selon une variante de réalisation.

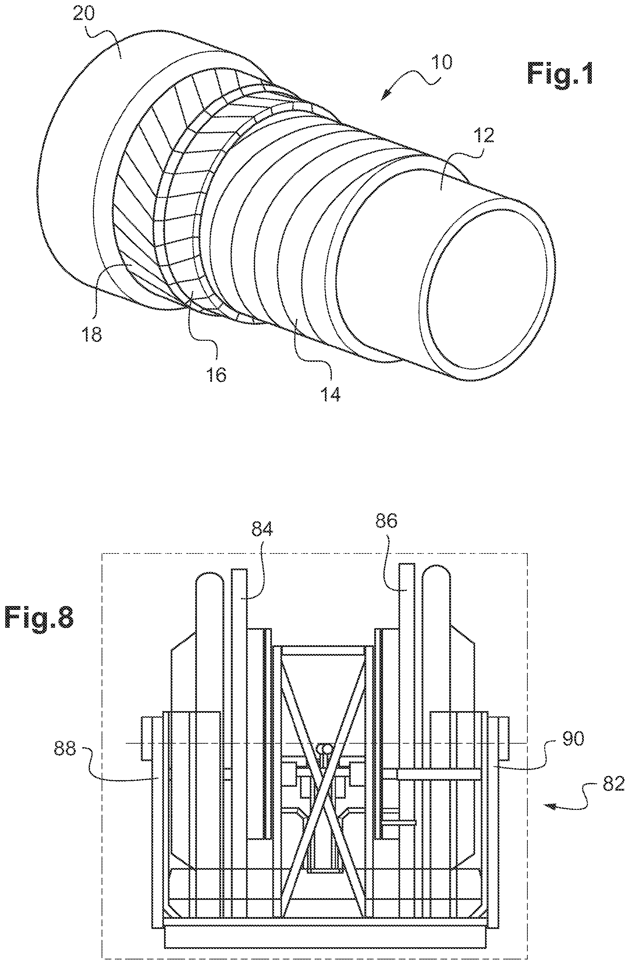

La Figure 1 illustre une conduite tubulaire flexible 10 spécialement destinée au transport des hydrocarbures à travers les fonds marins. Elle comporte, de l'intérieur vers l'extérieur, une gaine de pression interne étanche 12, à l'intérieur de laquelle circule les hydrocarbures ; une couche de fils d'armure 14 enroulés à pas court, typiquement selon un angle d'hélice compris entre 70° et 90° par rapport à l'axe central de la conduite tubulaire flexible 10, autour de la gaine de pression 12 et permettant de reprendre les efforts de pression internes avec la gaine interne 12 ; deux nappes de fils d'armure de traction 16, 18 enroulés à pas long, selon un angle d'armage compris entre 20° et 60° par rapport à l'axe central de la conduite tubulaire flexible 10, de manière à pouvoir reprendre les efforts longitudinaux de traction. Précisément, ces deux nappes 16, 18 sont réalisées par enroulement de fils en carbone tels que décrits dans le document FR2776358. Ces deux nappes 16, 18 sont ici recouvertes d'une gaine de protection externe 20. De manière préférentielle, une carcasse métallique réalisée par l'enroulement à pas court d'un feuillard profilé, selon un angle d'armage compris entre 70° et 90° par rapport à l'axe central de la conduite 10, peut être disposée intérieurement à la gaine de pression interne étanche 12.

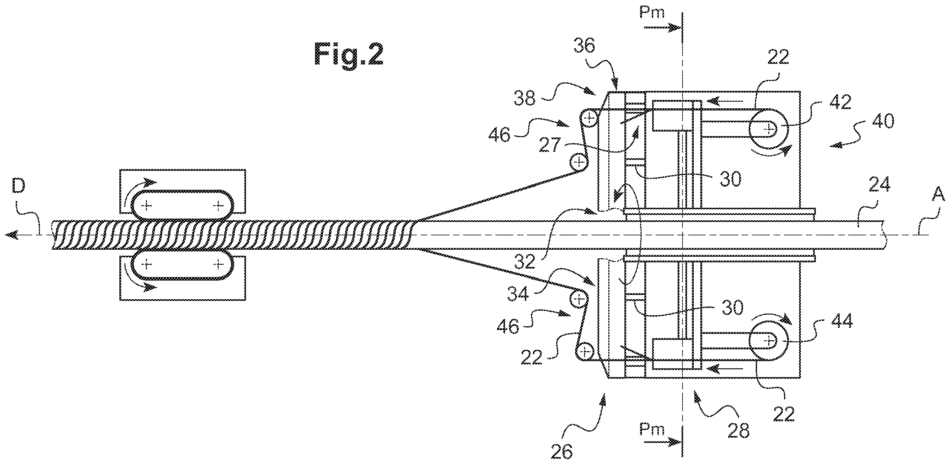

On décrira en référence à la Figure 2, un ensemble de pose d'une couche de fils d'armure 22 en carbone autour d'un noyau tubulaire 24 présentant uniquement la gaine interne 12 et la couche de fils d'armure 14 enroulés a pas court en spires jointives. L'ensemble de pose ici décrit reprend les éléments d'une installation d'armage existante destinée à réaliser les nappes de fils d'armure, à laquelle on vient rapporter une roue de guidage 26 pour pouvoir mettre en oeuvre des fils d'armure en fibres de carbone.

L'ensemble comporte une roue support 28 adaptée à être entraînée en rotation autour de son axe de symétrie A, lequel est confondu avec l'axe de symétrie du noyau tubulaire 24. La roue de guidage 26 est alors montée coaxialement sur la face avant 27 de la roue support 28 au moyen d'entretoises 30 ou rehausses. Les entretoises 30 permettent de s'affranchir de la longueur des têtes de préformation qui demeurent en place sur la tête d'armage. Après avoir été installées sur la roue support 28, les entretoises 30 peuvent y demeurer sans gêne en l'absence de roue de guidage 26 lorsque l'ensemble de pose est mis en oeuvre à dessein de pose de fils d'armure en acier. Les entretoises 30 sont fixées à la roue support au moyen d'une pluralité de vis de fixations. La roue de guidage est elle-même fixée aux entretoises 30 par l'intermédiaire de plusieurs vérins électromécaniques associés à des éléments de serrage.

La roue de guidage 26 présente un évidement central 32 et une bordure circulaire interne 34 qui s'étend autour de l'évidement central 32. Elle présente également un bord périphérique 36 et une bordure circulaire périphérique 38.

La roue support, 28 présente une face arrière 40 opposée à la face avant 27 dans laquelle sont respectivement installées des bobines 42, 44 de fils d'armure en carbone. Sur la Figure 2 en coupe axiale, deux seules bobines apparaissent. La roue support 28 est équipée d'une pluralité de bobines répartie dans la bordure périphérique arrière de la roue support 28. Dans un mode de réalisation particulier, la roue support 28 est équipée de 62 bobines de fil d'armure en carbone.

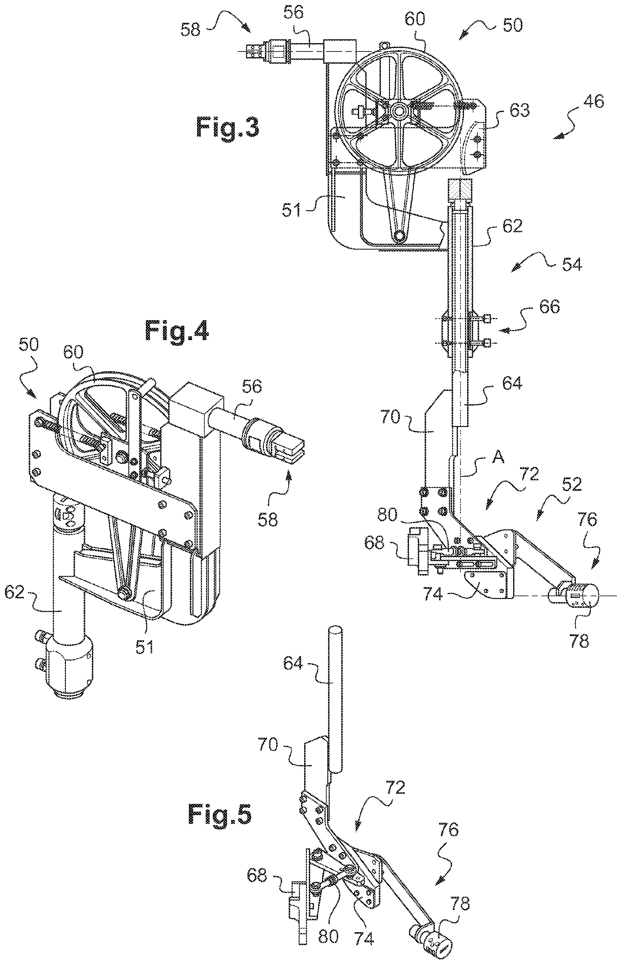

Ainsi, les bobines 42, 44 sont aptes à délivrer des fils d'armure 22, lesquels traversent la roue support 28 au niveau de sa bordure périphérique pour déboucher respectivement dans la bordure périphérique 38 de la roue de guidage 26. Les fils d'armure 22 traversent alors des dispositifs de guidage 46 installés sur la roue de guidage 26 et qui permettent de former un chemin de passage en S pour les fils d'armure en carbone. On décrira plus précisément les dispositifs de guidage 46 en référence aux Figures 3 à 5.

La Figure 3 est une vue d'ensemble du dispositif de guidage 46. Celui-ci comporte un organe de renvoi périphérique 50 opposé à un organe de renvoi central 52, et un organe de réglage rectiligne télescopique 54, formant un organe de guidage rectiligne, et reliant les deux organes de renvoi 50, 52. L'organe de renvoi périphérique 50 présente une ossature en L 51 et une pièce tubulaire amont 56 reliée à une extrémité de l'ossature 51, sensiblement perpendiculairement à la plus grande branche de cette ossature. A l'entrée de la pièce tubulaire amont 56, ou organe de guidage amont, un embout d'entrée 58, ou embout de guidage tubulaire, est monté libre en rotation et centré. L'embout d'entrée 58, également dénommé écubier, est destiné à faciliter le guidage transversal du fil d'armure en carbone. Aussi, le fil d'armure étant un ruban de section rectangulaire, l'embout d'entrée 58 présente une fente délimitée par des galets de guidage non représentés. Selon une variante, le fil d'armure est de section sensiblement circulaire.

L'organe de renvoi périphérique 50 comprend également une poulie de guidage 60, ou davier périphérique, d'un rayon compris, de préférence entre 300 mm et 400 mm par exemple de 350 mm. Elle est agencée par rapport à la pièce tubulaire amont 56, de manière à ce que la direction de cette dernière corresponde à une tangente de la poulie de guidage 60. L'organe de renvoi périphérique 50 comporte un manchon de réglage 62 solidaire de l'extrémité de la petite branche de l'ossature 51, et orienté dans le prolongement d'une autre tangente de la poulie de guidage 60. En outre, l'organe de renvoi périphérique 50 est équipé d'un patin de frein 63 qui permet d'assurer la retenue du fils d'armure en carbone si celui-ci est amené à se rompre durant la pose.

On retrouve en perspective sur la Figure 4 l'ossature en L 51 présentant d'une part la pièce tubulaire amont 56 et le manchon de réglage 62 orientés sensiblement perpendiculairement entre eux, et entre les deux, la poulie de guidage 60. On comprend ainsi, qu'un fil d'armure en carbone pourra être enfilé à travers l'embout d'entrée 58 pour venir prendre appui sur la poulie de guidage 60, puis emprunter le manchon de réglage 62, en formant un premier chemin de passage incurvé. Grâce à la poulie de guidage 60, le fil d'armure en carbone peut être entraîné à grande vitesse à travers l'organe de renvoi périphérique 50 sans être endommagé.

On se reportera de nouveau sur la Figure 3 montrant le dispositif de guidage 46 dans son ensemble. À l'intérieur du manchon de réglage 62, est emmanché un tube de liaison 64, pour former l'organe de réglage rectiligne télescopique 54. Le manchon de réglage 62 est équipé d'une bague de serrage 66 permettant de bloquer en mouvements le tube de liaison 64 par rapport au manchon de réglage 62, que ce soit en rotation ou en translation.

L'organe de renvoi central 52 comprend une plaque de liaison 70 solidaire du tube de liaison 64 et qui s'en étend longitudinalement en laissant libre l'espace interne du tube de liaison. La plaque de liaison 70 est alors reliée à un bras central 72 comprenant, un davier central 74, ici constitué d'une portion de disque, et d'un organe de guidage aval 76. Ce dernier comporte un embout de sortie 78, ou pièce aval de guidage tubulaire, ou encore écubier de sortie, de section analogue à celle de l'embout d'entrée 58 de l'organe de renvoi périphérique 50. Il est également monté à rotation sur l'organe de guidage aval 76. L'organe de guidage aval 76 maintien l'embout de sortie 78 dans le prolongement d'une tangente au davier central 74. En outre, l'axe B du tube de liaison 64 s'étend, lui également, selon une tangente du davier central 74.

Par ailleurs, le dispositif de guidage 46 comprend une platine de fixation 68 montée à pivotement sur le bras central 72 autour d'un axe sensiblement parallèle et voisin de l'axe B du tube de liaison 64. La platine de fixation 68 est également reliée au bras central 72 au niveau du davier central 74 par l'intermédiaire d'une biellette de réglage 80. Cette biellette de réglage 80 permet de maintenir la platine de fixation 68 et le bras central 72 écartés l'un de l'autre d'un angle compris par exemple entre 25° et 80°.

On retrouve en perspective sur la Figure 5, l'organe de renvoi central 52 et en particulier, la platine de fixation 68 et le bras central 72 reliés entre eux par la biellette de réglage 80. En tenant compte de la Figure 3, on comprend que le fil d'armure en carbone qui vient s'étendre dans le manchon de réglage 62 poursuit sa course à l'intérieur du tube de liaison 64 jusqu'à venir prendre appui sur le davier central 74 et à rejoindre l'embout de sortie 78 en empruntant un second chemin de passage incurvé. L'embout de sortie 78 monté à rotation, permet de corriger les dernières dérives angulaires du fil d'armure en carbone avant qu'il ne soit déposé sur le noyau tubulaire 24.

Grâce à la bague de serrage 66, la distance relative des deux organes de renvoi 50, 52 peut être ajustée en entraînant à coulissement le tube de liaison 64 à l'intérieur du manchon 62. Au surplus, le tube de liaison 64 peut être entraîné en rotation à l'intérieur du manchon 62 et ainsi la position angulaire relative des deux organes de renvoi 50, 52, peut également être ajustée. Ainsi, on comprend qu'entre la poulie de guidage 60 et le davier central 74, un mouvement de torsion peut être appliqué au fil d'armure autour de son âme centrale.

S'agissant de la platine de fixation 68, qui est montée en position fixe dans la bordure circulaire interne 34 de la roue de guidage 26 comme on l'expliquera ci-après, la position angulaire relative du bras central 72 peut être ajustée par l'intermédiaire de la biellette de réglage 80. Cette position angulaire relative conditionne directement le mouvement de torsion à imprimer au fil d'armure.

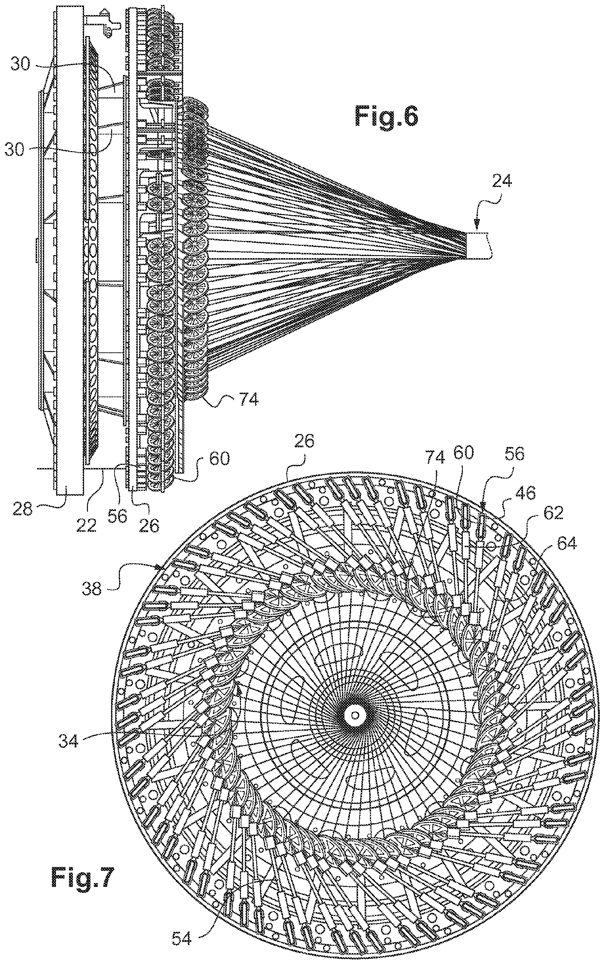

On se référera maintenant aux Figures 6 et 7 illustrant en détail la roue de guidage 26 installée sur la roue support 28. La Figure 7 illustre de face la roue de guidage 26 équipée d'une pluralité de dispositifs de guidage 46, et en l'espèce jusqu'à 80, répartis sur toute la roue. On y retrouve la bordure circulaire interne 34 et la bordure circulaire périphérique 38.

Chacun des dispositifs de guidage 46 est ainsi monté, la pièce tubulaire amont 56 à travers la bordure circulaire périphérique 38, sensiblement perpendiculairement au plan moyen définit par la roue de guidage 26, et la platine de fixation 68 équipée d'une pince sur la bordure circulaire interne 34, de façon que l'organe de réglage rectiligne télescopique 54 soit orienté selon une corde du cercle défini par la roue de guidage 26 d'un angle par exemple compris entre 20° et 45°. Selon l'exemple de mise en oeuvre représenté sur les Figures 6 et 7, le davier central 74 est une poulie, tout comme la poulie de guidage 60. Aussi, alors que la poulie de guidage 60 s'étend selon un plan sensiblement perpendiculaire au plan moyen définit par la roue de guidage 26, lequel correspond ici au plan de la Figure 7, le plan défini par le davier central 74 constitué d'une poulie forment un angle d'environ 20° avec le plan moyen de la roue de guidage 26.

Ainsi, en considérant tout d'abord la Figure 6 et ensuite la Figure 7 pour revenir à la Figure 6, un fil d'armure en carbone 22 traversant la roue support 28 et la bordure périphérique 38 de la roue de guidage 26 sensiblement perpendiculairement au plan moyen définit par cette roue, vient s'engager dans une pièce tubulaire amont 56 pour ensuite être renvoyé vers la bordure circulaire interne 34 par l'intermédiaire de la poulie de guidage 60 et de l'organe de réglage rectiligne télescopique 54 qui la prolonge, et ce, sensiblement parallèlement au plan moyen de la roue de guidage 26 et selon une corde du cercle défini par cette même roue. Ensuite, le davier central 74 renvoi à son tour le fil d'armure 22 à l'opposé de la roue de guidage 26, vers le noyau tubulaire 24. Le fil d'armure s'étend alors librement entre l'embout de sortie 78 de l'organe de guidage aval 76 et le noyau tubulaire 24 d'un angle voisin de 30° avec ce dernier.

On a décrit la position relative des différents éléments d'un point de vue statique. En reprenant l'ensemble de pose illustré sur la Figure 2, le noyau tubulaire 24 est entraîné en translation selon sa propre direction A, orientée de la roue support 28 vers la roue de guidage 26, tandis que simultanément, la roue support 28 et la roue de guidage 26 dont elle est solidaire sont entraînées en rotation autour du noyau tubulaire 24. De la sorte, en l'espèce, jusqu'à 80 fils d'armure 22 en carbone sont entraînés simultanément à travers la roue de guidage 26 et les dispositifs de guidage 46 correspondants, pour être enroulés hélicoïdalement à pas long autour du noyau tubulaire 24.

Chacun des fils d'armure en carbone empruntent ainsi un chemin de passage en S sur l'avant de la roue de guidage 26 permettant de préserver leurs caractéristiques mécaniques et de les appliquer sur le noyau tubulaire à la manière d'un ruban polymérique.

Selon un autre objet, l'invention concerne également une méthode de montage d'un ensemble de pose d'une couche de fils d'armure en carbone autour d'un noyau tubulaire pour fabriquer une conduite tubulaire flexible destinée au transport des hydrocarbures. Pour ce faire, on part d'une installation de fabrication existante permettant de réaliser les nappes d'armure en fil d'acier sur des noyaux tubulaires. Cette installation comprend deux roues support coaxiales situées à distance l'une de l'autre et formant les têtes d'armage. Aussi, on fournit deux roues de guidage conforment à l'invention afin d'équiper respectivement les deux roues supports précitées.

Afin de rationaliser la préparation des installations de fabrication, on prévoit un châssis de montage 82 tel que représenté sur la Figure 8. Ce châssis de montage 82 en trois parties, permettant de transporter dos à dos deux roues de guidage 84, 86, est représenté de manière schématique sur la Figure 8. Le châssis de montage présente deux flancs latéraux opposés 88, 90 permettant de maintenir les deux roues de guidage 84, 86 en position fixe dans le châssis de montage 82 grâce à des moyens de verrouillage.

Ainsi, dans une première phase du montage, on achemine le châssis 82, depuis une zone de stockage jusqu'à une zone préparatoire située près de l'installation de fabrication. Dans une deuxième phase de montage, on vient déverrouiller les organes de verrouillage pour pouvoir déverrouiller les flancs latéraux du châssis 82 pour ensuite pouvoir installer les dispositifs de guidage sur les roues de guidage 84, 86. Le châssis de montage 82 est équipé d'une motorisation permettant d'entraîner les roues de guidage en rotation sur le châssis 82 de manière à pouvoir installer un à un les dispositifs de guidage sur les roues de guidage 84, 86. Dans une troisième phase on vient régler, d'une part l'inclinaison des dispositifs de guidage par rapport aux rayons de la roue, et d'autre part l'angle de pose des fils d'armure en carbone. Ensuite, on installe les rehausses, qui resteront à demeure, sur l'avant des roues support de l'installation de fabrication, puis on vient rapporter respectivement les roues de guidage sur les roues support pour les y solidariser coaxialement au moyen des rehausses.

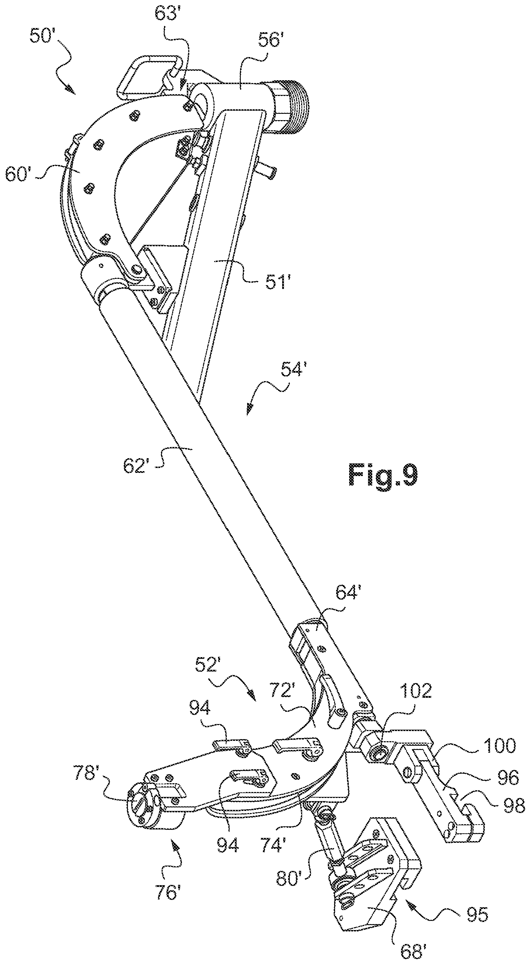

La Figure 9 représente un dispositif de guidage selon une autre variante de réalisation. Aussi, les éléments communs à la variante de réalisation illustrée sur les Figures 3-5, ou jouant le même rôle, présenteront la même référence affectée d'un signe prime « ' ».

Le dispositif de guidage comprend un organe de renvoi périphérique 50' opposé à un organe de renvoi central 52', et un organe de réglage rectiligne télescopique 54' reliant les deux organes de renvoi 50', 52'. L'organe de réglage rectiligne télescopique 54' comprend un tube principal 62'.

L'organe de renvoi périphérique 50' présente une pièce tubulaire amont 56' apte à recevoir un embout d'entrée non représenté sur la Figure 9, et une ossature transversale 51' permettant de relier ensemble, de manière rigide, la pièce tubulaire amont 56' et le tube principal 62' lesquels s'étendent sensiblement perpendiculairement l'un par rapport à l'autre.

L'organe de renvoi périphérique 50' comporte un davier supérieur 60' s'étendant en arc de cercle entre la pièce tubulaire amont 56' et le tube principal 62'. Son rayon de courbure est compris, de préférence entre 300 mm et 400 mm. En outre, il est supporté en partie par l'ossature transversale 51'.

L'organe de renvoi périphérique 50' est également équipé d'un patin de frein 63', ou butée radiaflex située sur le davier supérieur 60' près de la pièce tubulaire amont 56' et qui permet d'assurer la retenue du fils d'armure en carbone.

Ainsi, un fil d'armure en carbone pourra être enfilé à travers la pièce tubulaire amont 56' pour venir prendre appui sur davier supérieur 60', puis emprunter directement le tube principal 62', en formant un premier chemin de passage incurvé. Le fil d'armure en carbone peut alors être entraîné à grande vitesse et guidé contre le davier supérieur 60'.

L'organe de renvoi central 52' comprend un bras central 72' directement raccordé au tube principal 62' au moyen d'un tube de liaison 64' emmanché coaxialement à l'intérieur du tube principal 62'. Le tube de liaison 64' est monté libre en rotation et en translation à l'intérieur du tube principal 62'.

Le bras central 72' comprend, dans le prolongement du tube de liaison 64' un davier central 74' et un organe de guidage aval 76' réglable monté lui-même dans le prolongement du davier central 74'. L'organe de guidage aval 76' comporte, d'une part un embout de sortie 78', ou écubier de sortie, et d'autre part des leviers de blocage excentriques 94. Ainsi, l'organe de guidage aval 76' réglable, est monté pivotant sur le bras central 72' selon un plan défini par le davier central 74' et il est apte à être bloqué en pivotement grâce aux leviers de blocage excentriques 94.

L'embout de sortie 78' est monté à rotation sur l'organe de guidage aval 76'. L'organe de guidage aval 76' maintien l'embout de sortie 78' dans le prolongement d'une première tangente au davier central 74. En outre, le tube principal 62' et le tube de liaison 64' s'étendent, eux, selon une deuxième tangente du davier central 74', sensiblement perpendiculaire à la première.

Par ailleurs, le dispositif de guidage comprend une première platine de fixation 68' reliée au bras central 72' au niveau du flanc du davier central 74' par l'intermédiaire d'une biellette de réglage 80'. Cette dernière est montée à pivotement sur le bras central 72' autour d'un axe sensiblement parallèle et voisin de l'axe du tube de liaison 64'. Elle est également montée à pivotement sur la première platine de fixation 68'. La biellette de réglage 80' permet de maintenir la première platine de fixation 68' et le bras central 72' écartés l'un de l'autre d'un angle compris par exemple entre 30° et 80° ainsi qu'on l'expliquera ci-après. Elle présente en outre des premiers mors 95.

Le dispositif de guidage illustré sur la Figure 9 comprend également une seconde platine de fixation 96 présentant des seconds mors 98. Cette seconde platine de fixation 96 est installée à pivotement dans une chape 100. Cette dernière présente un retour monté lui-même à pivotement **sur un tourillon 102** à l'extrémité du tube de liaison 64' dans l'axe du tube principale 62'.

Ainsi, le fil d'armure en carbone qui vient s'étendre longitudinalement à l'intérieur du tube principal 62' et du tube de liaison 64' poursuit sa course jusqu'à venir prendre appui sur le davier central 74', et à rejoindre l'embout de sortie 78' en empruntant un second chemin de passage incurvé. L'embout de sortie 78' monté à rotation, permet de corriger les dernières dérives angulaires du fil d'armure en carbone avant qu'il ne soit déposé sur le noyau tubulaire 24.

Le tube de liaison 64' est monté à rotation à l'extrémité du tube principale 62' et ainsi la position angulaire relative des deux organes de renvoi 50', 52', peut être ajustée. Ainsi, entre le davier supérieur 60' et le davier central 74', un mouvement de torsion peut être appliqué au fil d'armure autour de son âme centrale.

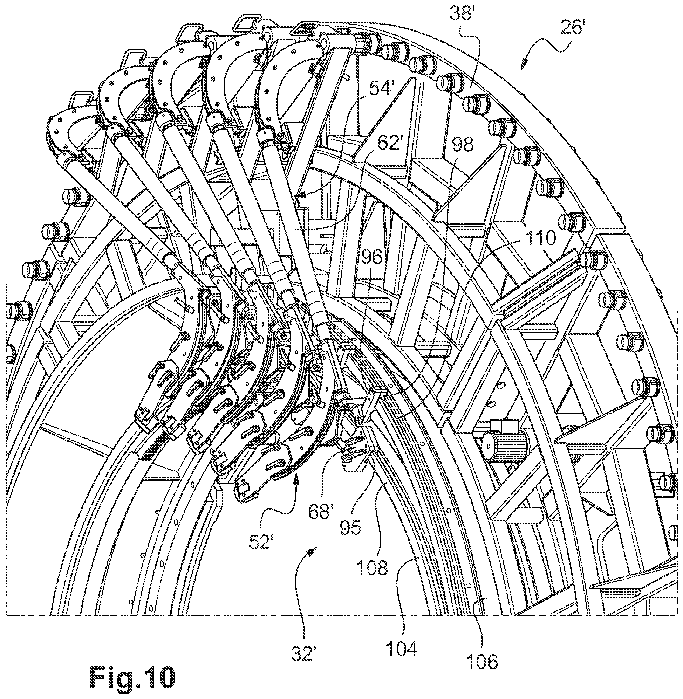

On se reportera sur la Figure 10 illustrant partiellement une roue de guidage 26' selon un mode de mise en oeuvre apte à recevoir des dispositifs de guidage selon ladite autre variante de réalisation.

Ainsi, la roue de guidage 26' présente un évidement central 32' et deux couronnes concentriques montées l'une dans l'autre à l'intérieur de l'évidement central 32', une première, intérieure 104 et une seconde, extérieure, 106. Aussi, les deux couronnes définissent respectivement une bordure circulaire interne 108 et une bordure circulaire externe 110. La seconde couronne extérieure 106 est montée mobile en rotation à l'intérieur de la roue de guidage 26', tandis que la première couronne intérieure 104 est montée mobile en rotation à l'intérieur de la seconde couronne extérieure 106. La roue de guidage présente également une bordure circulaire périphérique 38'.

On fera référence à un seul dispositif de guidage, bien que la roue de guidage 26' partiellement représentée en comporte uniquement cinq pour des raisons de clarté du dessin.

Ainsi, la seconde platine de fixation 96 est montée en position fixe dans la bordure circulaire externe 110 grâce aux seconds mors 98, tandis que la première platine de fixation 68' est montée en position fixe dans la bordure circulaire interne 108 grâce aux premiers mors 95. Il en est ainsi de tous les dispositifs de guidage montés sur la roue de guidage 26'.

De la sorte, lorsqu'il s'agit d'orienter les organes de réglage rectiligne télescopique 54' dans un plan sensiblement parallèle au plan moyen défini par la roue de guidage 26', on entraîne en rotation les deux couronnes 104, 106, solidaires l'une de l'autre, à l'intérieur de la roue de guidage 26'. De la sorte, les tubes de liaison 64' sont entraînés simultanément en translation respectivement à l'intérieur de leur tube principal 62' à mesure que les organes de réglage rectilignes télescopiques 54' s'orientent.

Lorsqu'il s'agit d'orienter angulairement les organes de renvoi central 52' par rapport aux organes de renvoi périphérique 50', la couronne extérieure 106 est maintenue en position fixe par rapport à la roue de guidage 26', tandis que la couronne intérieure 104 est entraînée en rotation par rapport à la couronne extérieure 106. De la sorte, le mouvement relatif des premières platines de fixation 68' respectivement par rapport à leur bras central 72' provoquent alors le pivotement du bras central 72' grâce à la biellette de réglage 80'.

De la sorte, les fils d'armure en carbone sont entraînés simultanément à travers la roue de guidage 26' et les dispositifs de guidage correspondants, peuvent être réglés simultanément et d'une même amplitude grâce aux deux couronnes 104, 106, avant de débuter l'enroulement hélicoïdal à pas long autour du noyau tubulaire 24.

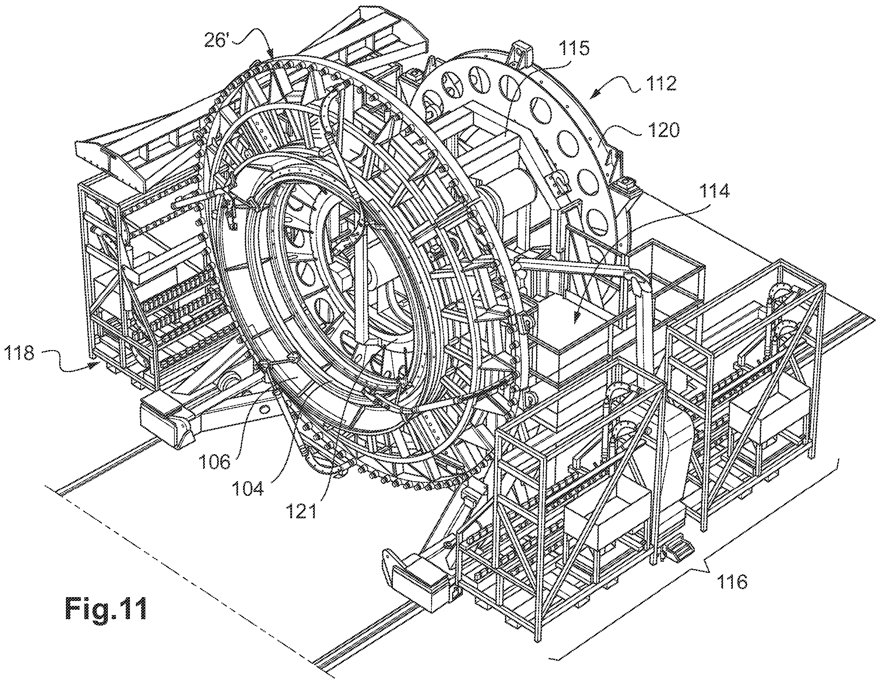

La Figure 11 illustre un support de stockage des roues de guidage 26' selon une variante de réalisation. Ledit support de stockage comporte un châssis de montage 112 présentant deux zones distinctes. Une première zone 114 centrale du châssis de montage 112 qui comprend un portique 115 de forme parabolique inversée sur lequel sont montés, dos à dos, deux plateaux de fixations 120, 121 mobiles en rotation et sur lesquels sont entreposées les deux roues de guidage 26'. Une seule des deux roues a été représentée sur la Figure 11. Une seconde zone composée de deux zones latérales 116, 118 identiques, opposées l'une de l'autre par rapport au portique 115 et constituant les flancs latéraux dudit châssis 112. Les zones 116 et 118 définissent des espaces de stockage des dispositifs de guidage et sont disposées sensiblement perpendiculairement aux faces avant desdites roues de guidage 26', en se faisant face. Ces espaces de stockage sont solidaires du châssis 112 lorsqu'il est transporté depuis une zone de stockage jusqu'à une zone préparatoire et de montage desdits dispositifs de guidage, mais ils peuvent aussi être déconnectés et déplacés en retrait de la première zone 114 du châssis 112 lors de l'étape de montage des dispositifs de guidage sur les roues de guidage 26' pour permettre une meilleure mobilité des opérateurs.

Aussi, et comme décrit plus haut pour la préparation des installations de fabrication, on décrira maintenant les étapes successives de montage des dispositifs de guidage.

Dans une première phase du montage, on achemine le châssis 112, depuis une zone de stockage jusqu'à une zone préparatoire située près de l'installation de fabrication. Dans une deuxième phase de montage, on vient déconnectés les espaces de stockage pour créer de l'espace entre la première zone 114 et les deux zones latérales 116, 118 du châssis de montage et ainsi permettre aux opérateurs de jouir d'un espace suffisant pour circuler et installer facilement les dispositifs de guidage sur lesdites roues de guidage 26'. Le châssis de montage 112 est équipé d'une motorisation permettant d'entraîner les plateaux de fixation 120, 121 et partant, les roues de guidage en rotation sur le châssis 112 de manière à pouvoir installer un à un les dispositifs de guidage sur lesdites roues de guidage. Dans une troisième phase on vient régler, d'une part l'inclinaison des dispositifs de guidage par rapport aux rayons de la roue grâce à la couronne extérieure 106, et d'autre part l'angle de pose des fils d'armure en carbone grâce à la couronne intérieure 104. Ensuite, on installe les rehausses qui resteront à demeure sur l'avant des roues support de l'installation de fabrication, puis on vient rapporter respectivement les roues de guidage sur les roues support pour les y solidariser coaxialement au moyen des rehausses.

## Revendications

1. Roue de guidage (26) destinée à la pose d'une couche de fils d'armure en carbone autour d'un noyau tubulaire (24) pour fabriquer une conduite tubulaire flexible apte au transport des hydrocarbures, ladite roue de guidage (26) présentant d'une part un évidement central (32) et une bordure circulaire interne (34) bordant ledit évidement central, et d'autre part une bordure circulaire périphérique (38) qui s'étend coaxialement à distance de ladite bordure circulaire interne (34), ladite roue de guidage (26) comportant une pluralité de dispositifs de guidage (46) apte à guider respectivement en translation une pluralité de fils d'armure en carbone traversant ladite bordure circulaire périphérique (38), les dispositifs de guidage étant montés autour dudit évidement central (32) pour pouvoir guider les fils d'armure en carbone lorsque ledit noyau tubulaire (24) est entraîné en translation à travers ledit évidement central, tandis que ladite roue de guidage (26) est entraînée en rotation, de manière à pouvoir enrouler hélicoïdalement simultanément lesdits fils d'armure en carbone autour dudit noyau tubulaire (24), chacun desdits dispositifs de guidage (46) comprenant d'une part un organe de renvoi périphérique (50) monté dans ladite bordure circulaire périphérique (38) pour pouvoir guider les fils d'armure en carbone vers ladite bordure circulaire interne (34) à travers un premier chemin de passage incurvé, et d'autre part un organe de renvoi central (52) monté dans ladite bordure circulaire interne (34) pour pouvoir guider lesdits fils d'armure en carbone à travers un second chemin de passage incurvé à l'opposé de ladite roue ;
**caractérisée en ce que** ledit organe de renvoi périphérique (50) et ledit organe de renvoi central (52) sont reliés ensemble par un organe de guidage rectiligne (54).

2. Roue de guidage selon la revendication 1, **caractérisée en ce que** ledit organe de guidage rectiligne (54) est télescopiquement réglable.

3. Roue de guidage selon la revendication 1 ou 2, **caractérisée en ce que** ledit organe de renvoi périphérique (50) et ledit organe de renvoi central (52) sont réglables en rotation l'un par rapport à l'autre selon l'axe dudit organe de guidage rectiligne (54).

4. Roue de guidage selon l'une quelconque des revendications 1 à 3, **caractérisée en ce que** chacun desdits dispositifs de guidage (46) comprend en outre une platine de fixation (68) montée à pivotement sur ledit organe de renvoi central (52) et un organe de réglage (80) de la position relative dudit organe de renvoi central et de ladite platine de fixation.

5. Roue de guidage selon l'une quelconque des revendications 1 à 4, **caractérisée en ce que** ledit organe de renvoi périphérique (50) comprend un organe de guidage amont (56) destiné à être fixé à travers ladite bordure circulaire périphérique (38).

6. Roue de guidage selon la revendication 5, **caractérisée en ce que** ledit organe de guidage amont (56) comprend un embout de guidage tubulaire (58) montée à rotation, ledit embout de guidage tubulaire (58) présentant une fente d'entrée.

7. Roue de guidage selon l'une quelconque des revendications 1 à 6, **caractérisée en ce que** ledit organe de renvoi central (52) comprend un organe de guidage aval (76), ledit organe de guidage aval comportant une pièce aval de guidage tubulaire (78) montée à rotation.

8. Roue de guidage selon l'une quelconque des revendications 1 à 7, **caractérisée en ce que** ledit organe de renvoi périphérique (50) et ledit organe de renvoi central (52) de chacun desdits dispositifs de guidage (46) sont ajustés dans le prolongement l'un de l'autre selon une corde de ladite roue (26).

9. Méthode de montage d'un ensemble de pose d'une couche de fils d'armure en carbone autour d'un noyau tubulaire (24) pour fabriquer une conduite tubulaire flexible destinée au transport des hydrocarbures, ladite méthode étant du type selon laquelle on fournit une installation de fabrication comprenant au moins une roue support (28) présentant un orifice de passage central pour autoriser le passage d'un noyau tubulaire (24) à travers ladite au moins une roue support, ladite au moins une roue support (28) comprenant des moyens de stockage aptes à stocker une pluralité de fils d'armure en carbone, de manière à pouvoir entraîner en rotation lesdits fils d'armure en carbone autour dudit noyau tubulaire (24), tandis que ledit noyau tubulaire est entraîné en mouvement à travers ladite au moins une roue support (28) pour enrouler hélicoïdalement lesdits fils d'armure en carbone sur ledit noyau ;
**caractérisée en ce qu'**on fournit en outre une roue de guidage (26) selon l'une quelconque des revendications 1 à 8, et **en ce qu'**on installe coaxialement ladite roue de guidage (26) sur ladite au moins une roue support (28).

10. Méthode de montage selon la revendication 9, **caractérisée en ce qu'**on fournit en outre un châssis de montage (82) comprenant des organes de verrouillage de manière à pouvoir stoker et verrouiller ladite roue de guidage (84, 86) sur ledit châssis de montage (82).

11. Méthode de montage selon la revendication 10, **caractérisée en ce que** ledit châssis de montage (82) comprend en outre une motorisation pour pouvoir manipuler ladite roue de guidage (84, 86).

12. Méthode de montage selon les revendications 10 et 11, **caractérisée en ce que** l'étape d'installation de ladite roue de guidage (26) comprend les étapes suivantes :
- on achemine ledit châssis de montage (82) au voisinage de ladite installation de fabrication ;
- on déverrouille lesdits organes de verrouillage ;
- on installe lesdits dispositifs de guidage (46) ;
- on règle lesdits dispositifs de guidage (46) ;
- on installe des rehausses (30) sur ladite au moins une roue support (28) ; et,
- on rapporte ladite roue de guidage (26) sur ladite au moins une roue support (28) pour la fixer au moyen desdites rehausses.

## Patentansprüche

1. Führungsrad (26), bestimmt zum Verlegen einer Schicht von Armierungsdrähten aus Kohlenstoff um einen rohrförmigen Kern (24), um eine flexible Rohrleitung herzustellen, die für den Transport von Kohlenwasserstoffen eingerichtet ist, wobei das Führungsrad (26) einerseits eine mittlere Ausnehmung (32) und eine innere kreisförmige Umrandung (34) aufweist, welche die mittlere Ausnehmung umrandet, und andererseits eine umlaufende kreisförmige Umrandung (38) aufweist, die sich koaxial im Abstand zu der inneren kreisförmigen Umrandung (34) erstreckt, wobei das Führungsrad (26) eine Mehrzahl von Führungsvorrichtungen (46) aufweist, die eingerichtet sind, um jeweils eine Mehrzahl von Armierungsdrähten aus Kohlenstoff in Translation zu führen, welche die umlaufende kreisförmige Umrandung (38) durchqueren, wobei die Führungsvorrichtungen um die mittlere Ausnehmung (32) herum gelagert sind, um die Armierungsdrähte aus Kohlenstoff führen zu können, wenn der rohrförmige Kern (24) zur Translation durch die mittige Ausnehmung (32) hindurch angetrieben wird, während das Führungsrad (26) so zur Drehung angetrieben wird, dass es die Armierungsdrähte aus Kohlenstoff gleichzeitig spiralförmig um den rohrförmigen Kern (24) wickeln kann, wobei jede der Führungsvorrichtungen (46) einerseits ein umlaufendes Umlenkungsmittel (50) umfasst, das in der umlaufenden kreisförmigen Umrandung (38) gelagert ist, um die Armierungsdrähte aus Kohlenstoff durch einen ersten gekrümmten Durchtrittsweg hindurch zu der inneren kreisförmigen Umrandung (34) hin führen zu können, und andererseits ein mittleres Umlenkungsmittel (52) umfasst, das in der inneren kreisförmigen Umrandung (34) gelagert ist, um die Armierungsdrähte aus Kohlenstoff durch einen zweiten gekrümmten Durchtrittsweg hindurch entgegengesetzt zu dem Rad führen zu können;
**dadurch gekennzeichnet, dass** das umlaufende Umlenkungsmittel (50) und das mittlere Umlenkungsmittel (52) durch ein geradliniges Führungsmittel (54) miteinander verbunden sind.

2. Führungsrad nach Anspruch 1, **dadurch gekennzeichnet, dass** das geradlinige Führungsmittel (54) teleskopartig verstellbar ist.

3. Führungsrad nach Anspruch 1 oder 2, **dadurch gekennzeichnet, dass** das umlaufende Umlenkungsmittel (50) und das mittlere Umlenkungsmittel (52) in Rotation zueinander gemäß der Achse des geradlinigen Führungsmittels (54) einstellbar sind.

4. Führungsrad nach einem der Ansprüche 1 bis 3, **dadurch gekennzeichnet, dass** jede der Führungsvorrichtungen (46) ferner eine Befestigungsplatte (68), die an dem mittleren Umlenkungsmittel (52) schwenkbar gelagert ist, und ein Mittel (80) zum Einstellen der relativen Position des mittleren Umlenkungsmittels und der Befestigungsplatte umfasst.

5. Führungsrad nach einem der Ansprüche 1 bis 4, **dadurch gekennzeichnet, dass** das umlaufende Umlenkungsmittel (50) ein stromaufwärtiges Führungsmittel (56) umfasst, das zur Befestigung durch die umlaufende kreisförmige Umrandung (38) hindurch bestimmt ist.

6. Führungsrad nach Anspruch 5, **dadurch gekennzeichnet, dass** das stromaufwärtige Führungsmittel (56) einen rohrförmigen Führungsstutzen (58) umfasst, der drehbar gelagert ist, wobei der rohrförmige Führungsstutzen (58) einen Einlassschlitz aufweist.

7. Führungsrad nach einem der Ansprüche 1 bis 6, **dadurch gekennzeichnet, dass** das mittlere Umlenkungsmittel (52) ein stromabwärtiges Führungsmittel (76) umfasst, wobei das stromabwärtige Führungsmittel ein stromabwärtiges rohrförmiges Führungsteil (78) umfasst, das drehbar gelagert ist.

8. Führungsrad nach einem der Ansprüche 1 bis 7, **dadurch gekennzeichnet, dass** das umlaufende Umlenkungsmittel (50) und das mittige Umlenkungsmittel (52) jeder der Führungsvorrichtungen (46) in der Verlängerung voneinander gemäß einer Kreissehne des Rades (26) angepasst sind.

9. Verfahren zum Montieren einer Anordnung zum Verlegen einer Schicht von Armierungsdrähten aus Kohlenstoff um einen rohrförmigen Kern (24), um eine flexible Rohrleitung herzustellen, die für den Transport von Kohlenwasserstoffen bestimmt ist, wobei das Verfahren von dem Typ ist, wonach eine Herstellungsanlage bereitgestellt wird, die mindestens ein Trägerrad (28) umfasst, das eine mittlere Durchtrittsöffnung aufweist, um den Durchtritt eines rohrförmigen Kerns (24) durch das mindestens eine Trägerrad (28) hindurch zu gestatten, wobei das mindestens eine Trägerrad (28) Bevorratungsmittel umfasst, die dazu eingerichtet sind, eine Mehrzahl von Armierungsdrähten aus Kohlenstoff zu bevorraten, so dass es die Armierungsdrähte aus Kohlenstoff zur Drehung um den rohrförmigen Kern (24) herum antreiben kann, während der rohrförmige Kern durch das mindestens eine Führungsrad (26) hindurch zur Drehung angetrieben wird, um die Armierungsdrähte aus Kohlenstoff spiralförmig um den Kern wickelt,
**dadurch gekennzeichnet, dass** ferner ein Führungsrad (26) nach einem der Ansprüche 1 bis 8 bereitgestellt wird und dass das Führungsrad (26) an dem mindestens einen Trägerrad (28) koaxial installiert wird.

10. Montageverfahren nach Anspruch 9, **dadurch gekennzeichnet, dass** ferner ein Montagerahmen (82) bereitgestellt wird, der Verriegelungsmittel umfasst, um das Führungsrad (84, 86) an dem Montagerahmen (82) bevorraten und verriegeln zu können.

11. Montageverfahren nach Anspruch 10, **dadurch gekennzeichnet, dass** der Montagerahmen (82) ferner einen Motorantrieb umfasst, um das Führungsrad (84, 86) handhaben zu können.

12. Montageverfahren nach Anspruch 10 und 11, **dadurch gekennzeichnet, dass** der Schritt des Installierens des Führungsrads (26) die folgenden Schritte umfasst:
- Verbringen des Montagerahmen (82) in die Nähe der Herstellungsanlage;
- Entriegeln der Entriegelungsmittel;
- Installieren der Führungsvorrichtungen (46);
- Einstellen der Führungsvorrichtungen (46);
- Installieren der Aufsetzgestelle (30) an dem mindestens einen Trägerrad (28); und
- Anbringen des Führungsrads (26) an dem mindestens einen Trägerrad (28), um es mittels der Aufsetzgestelle (30) zu befestigen.

## Claims

1. Guide wheel (26) intended for laying a layer of carbon armor filaments around a tubular core (24) to manufacture a flexible tubular pipe suitable for the transport of hydrocarbons, the said guide wheel (26) having both a central recess (32) and an inner circular edge (34) bordering the said central recess and also a peripheral circular edge (38) which extends coaxially at a distance from the said inner circular border (34), the said guide wheel (26) comprising a plurality of guide assemblies (46) capable of guiding a plurality of carbon armor filaments respectively in translation through the said peripheral circular edge (38), the guide assemblies being mounted around the said central recess (32) to guide the carbon armor filaments when the said tubular core (24) is driven in translation through the said central recess, while the said guide wheel (26) is driven in rotation in such a way that the said carbon armor filaments can be simultaneously helically wound around the said tubular core (24), each of the said guide assemblies (46) comprising a peripheral return member (50) mounted in the said peripheral circular edge (38) to guide the carbon armor filaments towards the said inner circular edge (34) along a first curved passageway and also a central return member (52) mounted in the said inner circular edge (34) to guide the said carbon armor filaments along a second curved passageway opposite to the said wheel;
**characterized in that** the said peripheral return member (50) and the said central return member (52) are connected together by means of a straight guide member (54).

2. Guide wheel as claimed in claim 1, **characterized in that** the said straight guide member (54) is telescopically adjustable.

3. Guide wheel as claimed in claims 1 or 2, **characterized in that** the said peripheral return member (50) and the said central return member (52) can be adjusted in rotation with respect to each other along the axis of the said straight guide member (54).

4. Guide wheel as claimed in any one of claims 1 to 3, **characterized in that** each of the said guide assemblies (46) also comprises an attachment plate (68) pivotally mounted on the said central return member (52) and a member (80) for adjusting the relative position of the said central return member and the said attachment plate.

5. Guide wheel as claimed in any one of claims 1 to 4, **characterized in that** the said peripheral return member (50) comprises an upstream guide member (56) intended to be attached through the said peripheral circular edge (38).

6. Guide wheel as claimed in claim 5, **characterized in that** the said upstream guide member (56) comprises a rotationally mounted tubular guide end member (58), the said tubular guide end member (58) having an inlet slot.

7. Guide wheel as claimed in any one of claims 1 to 6, **characterized in that** the said central return member (52) comprises a downstream guide member (76), the said downstream guide member comprising a rotationally mounted downstream tubular guide member (78).

8. Guide wheel as claimed in any one of claims 1 to 7, **characterized in that** the said peripheral return member (50) and the said central return member (52) of each of the said guide assemblies (46) are adjusted to be in an extension of each other along a chord of the said wheel (26).

9. Method for assembling an assembly for laying a layer of carbon armor filament around a tubular core (24) to manufacture a flexible tubular pipe intended for the transport of hydrocarbons, the said method being of the type as claimed in which there is provided a machine comprising at least one supporting wheel (28) having a central passage opening to allow the passage of a tubular core (24) through the at least one supporting wheel, the said at least one supporting wheel (28) comprising storage means capable of storing a plurality of carbon armor filaments so that the said carbon armor filaments can be drawn in rotation around the said tubular core (24), while the said tubular core is driven in movement through the said at least one supporting wheel (28) to helically wind the said carbon armor filaments onto the said core,
**characterized in that** a guide wheel (26) as claimed in any one of claims 1 to 8 is also provided and that the said guide wheel (26) is coaxially mounted on the said at least one supporting wheel (28).

10. Assembly method as claimed in claim 9, **characterized in that** an assembly frame (82) comprising locking members capable of mounting and locking the said guide wheel (84, 86) on the said assembly frame (82) is also provided.

11. Assembly method as claimed in claim 10, **characterized in that** the said assembly frame (82), also comprises a motor drive to manipulate the said guide wheel (84, 86).

12. Assembly method as claimed in claims 10 and 11, **characterized in that** the stage of fitting the said guide wheel (26) comprises the following stages:
- delivering the said assembly frame (82) to the vicinity of the said machine;
- unlocking the said locking members;
- installing the said guide assemblies (46);
- adjusting the said guide assemblies (46);
- fitting raised supports (30) onto the said at least one supporting wheel (28); and
- offering up the said guide wheel (26) to the said at least one supporting wheel (28) in order to attach it by means of the said raised supports.
